Europäisches Patentamt

European Patent Office

Office européen des brevets

(19)

(11) Veröffentlichungsnummer: **0 203 156**
**B1**

(12) **EUROPÄISCHE PATENTSCHRIFT**

(45) Veröffentlichungstag der Patentschrift:
**26.10.88**

(51) Int. Cl.⁴: **B 25 J 9/00**, B 25 J 15/10

(21) Anmeldenummer: **85906059.2**

(22) Anmeldetag: **22.11.85**

(86) Internationale Anmeldenummer:
**PCT/EP 85/00637**

(87) Internationale Veröffentlichungsnummer:
**WO 86/03156 (05.06.86** Gazette 86/12)

(54) **GREIFERHAND BEI EINEM MANIPULATOR.**

(30) Priorität: **23.11.84 DE U0843435**

(43) Veröffentlichungstag der Anmeldung:
**03.12.86 Patentblatt 86/49**

(45) Bekanntmachung des Hinweises auf die Patenterteilung:
**26.10.88 Patentblatt 88/43**

(84) Benannte Vertragsstaaten:
**AT BE CH DE FR GB IT LI LU NL SE**

(56) Entgegenhaltungen:
**WO - A - 83/02249**
**DE - A - 3 211 992**

(73) Patentinhaber: **Blomberg Robotertechnik GmbH,
Voltastrasse 50, D-4730 Ahlen (DE)**

(72) Erfinder: **Richter, Hans, Oberländer StraBe 123,
D-8900 Augsburg (DE)**

(74) Vertreter: **Charrier, Rolf, Dipl.-Ing.,
Postfach 260 Rehlingenstrasse 8,
D-8900 Augsburg 31 (DE)**

## Beschreibung

Die Erfindung betrifft eine Greiferhand als Bestandteil von einem Manipulator, welche aus mehreren der menschlichen Hand nachgebildeten hohlen Gliedern besteht, die gelenkig miteinander verbunden sind, wobei jedem Glied ein reversibel betätigbarer Stellantrieb und ein Sensor zugeordnet ist, zum Programmieren die Sensoren die Bewegungen der Glieder erfassen, die von einer in die Greiferhand eingesetzten menschlichen Hand ausgeführt werden und die Signale der Sensoren das Programm bestimmen, das die Glieder, gesteuert durch den jeweiligen Stellantrieb ausführen, wobei die Greiferhand an einem Arm angeordnet ist, der durch die Bewegungen der Greiferhand programmierbar ist, wenn in die Greiferhand eine menschliche diese Bewegungen ausführende Hand eingesetzt ist und dieser Arm Bewegungen in drei zueinander senkrechten Achsen und Drehbewegungen auszuführen vermag.

Eine derartige Greiferhand ist in WO 83/02249 dargestellt. Sie ist Teil eines Manipulators, der aus mehreren, dem menschlichen Arm nachgebildeten Armgliedern besteht, die an einem Brustglied angelenkt sind, das von einem Fahrgestell getragen wird. Das Fahrgestell ist an einem Gelenkmechanismus angeordnet, dessen Ende, das dem Fahrgestell abgewandt ist, an einem starren Träger angeordnet ist. In der Gelenkkette zwischen dem starren Träger und der Greiferhand ist jedem Kettenglied ein Stellantrieb und mindestens ein Sensor zugeordnet. Zum Programmieren des Manipulators und der Greiferhand nimmt eine Person auf dem Fahrgestell Platz und führt die zu programmierenden Bewegungen aus. Diese werden von den den Gliedern der Greiferhand zugeordneten Sensoren und den den Kettengliedern zugeordneten Sensoren erfasst und die von den Sensoren erzeugten Signale werden aufgezeichnet und bestimmen sodann die vom Manipulator und der Greiferhand auszuführenden Bewegungen, jeweils über die Stellantriebe gesteuert.

Hierbei ist der Manipulator speziell ausgebildet.

Es sind eine Reihe weiterer Manipulatoren bekannt, die nach dem Prinzip eines Vier- oder Fünfgelenks aufgebaut sind. Ein solcher Manipulator ist beispielsweise dargestellt in der österreichischen Patentschrift 365 503. Es ist bekannt, derartige Manipulatoren mit einem Programmiergriff auszurüsten, um die Bewegungen des Manipulators programmieren zu können. Der Programmiergriff ist hierbei am letzten Glied des Handhabungsgeräts angeordnet. Beim Programmieren wird der Programmiergriff erfasst und die ihm zugeordneten Sensoren erzeugen Signale, die aufgezeichnet werden und die gleichzeitig die Stellantriebe des Manipulators steuern, wodurch das letzte Glied des Manipulators, an welchem der Programmiergriff angeordnet ist, einer gewünschten Bewegungsbahn nachgeführt werden kann. Zwei Ausführungsformen eines derartigen Programmiergriffs zeigt die vorgenannte österreichische Patentschrift 365 503.

Es besteht die Aufgabe, die vorgenannte Greiferhand so mit einem beliebigen Manipulator zu verbinden, dass mit der Programmierung der Bewegungen der Glieder der Greiferhand gleichzeitig der Manipulator programmierbar ist und dessen Teil, an dem die Greiferhand befestigt ist, Bewegungen ausführt, die die Greiferhand auszuführen hat.

Gelöst wird diese Aufgabe mit den kennzeichnenden Merkmalen des Anspruches 1. Vorteilhafte Ausgestaltungen sind den Unteransprüchen entnehmbar.

Die der Lösung zugrunde liegende Problematik sei wie folgt erläutert:

Den Gliedern der Greiferhand ist jeweils ein Sensor zugeordnet, der die Bewegungen des ihm zugeordneten Glieds erfasst, wenn dieses von Hand bewegt wird. Die Aufzeichnungen der Signale des Sensors steuern dann den diesem Glied zugeordneten Stellantrieb.

Ein Manipulator, dessen Glieder nicht von Hand bewegbar sind und dessen Bewegungen bei der Programmierung mittels eines Programmiergriffes durch dessen Stellantriebe bewirkt werden, erfolgt jedoch auf andere Weise. Die im Programmiergriff angeordneten Sensoren erfassen die von Hand eingeleiteten Bewegungen und setzen diese in elektrische Signale um. Diese elektrischen Signale werden einer Koordinatentransformation unterworfen und führen zu Steuersignalen für die einzelnen Stellantriebe des Manipulators. Ist beispielsweise eine senkrechte Bewegung auszuführen, dann erzeugt der dieser senkrechten Bewegung zugeordnete Sensor ein Signal, das nach Transformation zu Steuersignalen führt, die mehr als einen Stellantrieb steuern, in deren Zusammenwirken dann die senkrechte Bewegung zustande kommt.

Diese getrennten Programmierprinzipien können mit der vorliegenden Erfindung vereint werden.

Zwei Ausführungsbeispiele werden nachfolgend anhand der Zeichnung dargestellt. Es zeigen:

Fig. 1 eine teilweise im Schnitt dargestellte Greiferhand und deren Verbindung mit einem Arm des Manipulators mit einer Programmiervorrichtung gem. einer ersten Ausführungsform und

Fig. 2 eine schematische Darstellung der Verbindung unter Verwendung einer Programmiervorrichtung gem. einer zweiten Ausführungsform.

Aufbau und Wirkungsweise der Greiferhand 1 ist ausführlich in WO 83/02249 dargestellt und erläutert. Es sei deshalb nachfolgend nur die Bewegung eines Daumenfingerkuppenglieds 2 beschrieben. Das Fingerkuppenglied 2 ist über ein Gelenk 3 mit dem Fingerzwischenglied 4 verbunden. Beidseits des Gelenks 3 ist am Glied 2 je ein Bowdenzug 5, 6 befestigt. Jeder Bowdenzug 5, 6 führt zu einem hydraulischen Stellantrieb 7, der aus einem Zylinder mit Kolben besteht, an welchem der Bowdenzug befestigt ist. Weiterhin ist dem Stellantrieb 7 ein Sensor 8 zugeordnet, der die Bewegungen des jeweiligen Bowdenzug erfasst.

Zum Programmieren wird eine Hand in die Greiferhand 1 eingeführt. Deren Glieder sind zu diesem Zwecke hohl. Wird der Daumen der Hand bewegt, dann werden die Bewegungen beispielsweise des Fingerkuppengliedes 2 auf die den Bowdenzügen 5, 6 zugeordneten Sensoren 8 übertragen, deren Signale aufgezeichnet werden. Diese Signale steuern beim Betrieb der Greiferhand die den Bowdenzügen 5, 6 zugeordneten Stellantriebe 7, wodurch beispielsweise das Fingerkuppenglied 2 die zuvor von Hand ausgeführten und nunmehr programmierten Bewegungen nachvollzieht.

Alle Stellantriebe 7 und Sensoren 8 sind auf einem Handrückenglied 9 angeordnet.

Mit 10 ist schematisch das Ende eines Arms eines beliebigen Manipulators bezeichnet. Mit diesem Armende 10 verbunden ist eine Programmiervorrichtung 11, deren Aufbau nachfolgend noch erläutert wird. Das dem Armende 10 abgewandte Ende der Programmiervorrichtung 11 weist eine Kupplung 27 auf, mit welcher dieses Programmiervorrichtungsende verbindbar ist mit dem Handrückenglied 9. Parallel zur Programmiervorrichtung 11 verläuft ein starres Verbindungsstück 12, das mit dem Armende 10 starr verbunden ist. An seinem dem Armende 10 abgewandten Ende ist dieses über eine Kupplung 13 mit einem Kupplungsstück 14 verbunden, das seinerseits über eine Kupplung 15 mit dem Handrückenglied 9 verbunden ist.

Zum Programmieren wird die Kupplung 15 gelöst und bevorzugt durch Lösen der Kupplung 13 das Kupplungsstück 14 entfernt, so dass keine Verbindung zwischen dem Handrückenglied 9 und dem Verbindungsstück 12 besteht. Das Handrückenglied 9 ist jedoch über die Kupplung 27 mit der Programmiervorrichtung 11 verbunden. Ist eine menschliche Hand 16 in die Greiferhand eingesetzt, dann werden deren Bewegungen über die Kupplung 27 auf die Programmiervorrichtung 11 übertragen. Damit sind nicht nur die Glieder der Hand 1 wie vorerwähnt programmierbar sondern auch der Manipulator, an dessen Armende 10 die Greiferhand 1 angeschlossen ist. Die Programmierung des Manipulators erfolgt über die Programmiervorrichtung 11.

Nach durchgeführter Programmierung wird das Kupplungsstück 14 wieder eingesetzt und das Handrückenglied 9 über die Kupplungen 13, 15 mit dem Verbindungsstück 12 und damit mit dem Armende 10 starr verbunden. Die von den Sensoren der Programmiervorrichtung 11 erzeugten Signale steuern sodann nach Transformation als aufgezeichnete Steuersignale die Stellantriebe des Manipulators und damit die zuvor durch die Hand 16 eingegebenen Bewegungen des Armendes 10. Die Steuerung der Fingerglieder der Hand 1 erfolgt über die Stellantriebe 7 in Abhängigkeit der zuvor aufgezeichneten Signale der Sensoren 8, wie bei der Programmierung erzeugt.

Bevorzugt ist die Verbindung zwischen dem Armende 10 und der Programmiervorrichtung 11 lösbar, in dem eine Kupplung 17 vorgesehen ist. Am Ende des Programmiervorganges und vor dem Einsetzen des Kupplungsstücks 14 wird die Kupplung 27 gelöst und die Greiferhand entfernt. Sodann kann die Programmiervorrichtung 11 vom Armende 10 durch Lösen der Kupplung 17 abgezogen werden, womit sie zur Programmierung weiterer Manipulatoren zur Verfügung steht. Danach wird die Greiferhand 1 wie zuvor beschrieben über die Kupplungen 13, 15 und das Kupplungsstück 14 mit dem Verbindungsstück 12 verbunden.

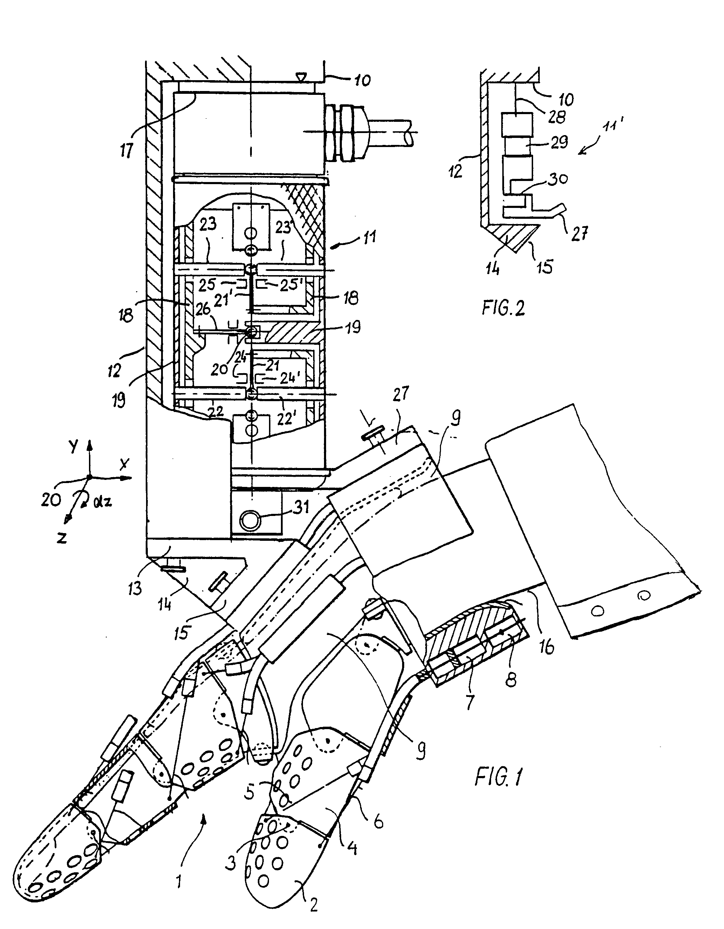

Gemäss Fig. 1 findet eine Programmiervorrichtung 11 Anwendung, wie sie als Programmiergriff in der österreichischen Patentschrift 365 503 beschrieben ist. Diese Programmiervorrichtung 11 weist ein Innenteil 18 auf, das starr mit dem Armende 10 verbunden ist. Dieses Innenteil 18 wird umgeben von einer Hülse 19, die mit der Kupplung 27 starr verbunden ist. Zwischen Hülse und Innenteil sind Blattfedern vorgesehen. Jeder ist an einem Ende am Innenteil angeordnet und trägt am anderen Ende eine Kugel, gegen welche Anschläge anliegen, die mit der Hülse starr verbunden sind. Jeder Blattfeder sind zwei Sensoren zugeordnet. Der Koordinatenmittelpunkt der Programmiervorrichtung ist mit 20 bezeichnet. Eine Programmierung in Richtung X sei nachfolgend erläutert.

Mit dem Innenteil 18 sind zwei Blattfedern 21, 21' verbunden die beidseits des Koordinatenmittelpunktes 20 quer zur X-Achse angeordnet sind. Die Kugeln der beiden Blattfedern 21, 21' werden beidseits durch Anschläge 22, 22' und 23, 23' umfasst, welche mit der Hülse 19 verbunden sind. Beidseits der Blattfeder 21 sind Sensoren 24, 24' und beidseits der Blattfeder 21' sind Sensoren 25, 25' angeordnet. Wird eine Bewegung in X-Richtung ausgeführt, dann werden die Federn 21, 21' verbogen, wodurch die Sensoren 24, 25 zueinander gleich grosse Signale erzeugen, die unterschiedlich sind zu den zueinander gleich grossen Signalen der Sensoren 24', 25'.

Wird dagegen von der Hand 16 eine Drehbewegung dz um die Achse z ausgeführt, dann erzeugen die Sensoren 24, 25' zueinander gleich grosse Signale, die unterschiedlich sind zu den zueinander gleich grossen Signalen der Sensoren 24', 25. Bei den vorerwähnten Bewegungen x und dz wird die Blattfeder 26 nicht beeinflusst, welche die Bewegung in y-Richtung erfasst. Der weitere Aufbau und die Wirkungsweise der Programmiervorrichtung 11 ist der vorerwähnten österreichischen Patentschrift 365 503 entnehmbar.

Bei der Programmiervorrichtung 11 nach Fig. 1 handelt es sich um eine solche, bei welcher die Sensoren vergleichbar mit einer elektrischen Parallelschaltung zwischen Innenteil 18 und Hülse 19 angeordnet sind, derart, dass jeweils ein Sensorenpaar einer Bewegungsrichtung zugeordnet ist und nur dieses Sensorenpaar Signale erzeugt wenn eine Bewegung ausgeführt wird, deren Bewegungsrichtung sie zugeordnet sind. Unterschiedlich dazu ist eine Programmiervorrichtung 11', die schematisch in Fig. 2 gezeigt ist. Hier ist eine erste Blattfeder 28 mit zugeordneten Sensoren vorgesehen, die einerseits mit dem Armende andererseits mit einem Verbindungsstück verbunden ist. In Verlängerung des Verbindungsstücks ist eine zweite Blattfeder 29 mit zugeordneten Sensoren vorgesehen, deren Ebene rechtwinklig zur Ebene der Blattfeder 29 verläuft. Diese Blattfeder 29 ist über ein weiteres Verbindungsstück verbunden mit einer Blattfeder 30 mit zugeordneten Sensoren, deren Ebene rechtwinklig zu den Ebenen der Blattfedern 28, 29 verläuft. Diese Blattfeder 30 ist sodann verbunden mit der Kupplung 27. Werden Bewegungen der Hand 16 über die Kupplung 27 auf die Programmiervorrichtung 11' eingeleitet, dann erzeugen die den Blattfedern 28, 29, 30 zugeordneten Sensoren Signale. die jedoch für die Bewegungsrichtungen einander überlagert sind. Bei einer Bewegung um die z-Achse beispielsweise werden die Federn 28, 30 verbogen, wodurch die entsprechendern Sensoren Signale erzeugen, die anschliessend einer Entkoppelung bedürfen.

An der Programmiervorrichtung 11 ist ein Tastenschalter 31 vorgesehen, der als Totschalter dient und während der Programmierer von einem Finger der anderen Hand der programmierenden Person betätigt wird. Tritt bei der Programmierung eine Fehlbewegung des Manipulators auf, dann wird durch Freigabe des Tastenschalters 31 der gesamte Antrieb des Manipulators schlagartig stillgesetzt.

## Patentansprüche

1. Greiferhand als Bestandteil von einem Manipulator, welche aus mehreren der menschlichen Hand nachgebildeten hohlen Gliedern (2) besteht, die gelenkig miteinander verbunden sind, wobei jedem Glied ein reversibel betätigbarer Stellantrieb (7) und ein Sensor (8) zugeordnet ist, zum Programmieren die Sensoren die Bewegungen der Glieder erfassen, die von einer in die Greiferhand eingesetzten menschlichen Hand ausgeführt werden und die Signale der Sensoren das Programm bestimmen, das die Glieder, gesteuert durch den jeweiligen Stellantrieb, ausführen, wobei die Greiferhand an einem Arm (10) angeordnet ist, der durch die Bewegungen der Greiferhand programmierbar ist, wenn in die Greiferhand eine menschliche, diese Bewegungen ausführende Hand eingesetzt ist und diese Armbewegungen in drei zueinander senkrechten Achsen und Drehbewegungen auszuführen vermag, dadurch gekennzeichnet, dass am Arm (10) eine Programmiervorrichtung (11, 11') und parallel dazu ein starres Verbindungsstück (12) vorgesehen sind, das dem Arm (10) abgewandte Ende des Verbindungsstücks (12) eine erste Kupplung (15) aufweist, das dem Arm (10) abgewandte Ende der Programmiervorrichtung (11, 11') mit dem dem Arm (10) zugewandten letzten Glied (9) der Greiferhand (1) verbunden ist und dieses Glied (9) über die erste Kupplung (15) mit dem Verbindungsstück (12) lösbar verbindbar ist.

2. Greiferhand nach Anspruch 1, dadurch gekennzeichnet, dass das dem Arm (10) abgewandte Ende der Programmiervorrichtung (11, 11') eine zweite Kupplung (27) aufweist, mit der die Programmiervorrichtung (11, 11') lösbar mit dem letzten Glied (9) verbunden ist.

3. Greiferhand nach Anspruch 1 oder 2, dadurch gekennzeichnet, dass die Programmiervorrichtung (11, 11') lösbar mit dem Arm (10) verbunden ist.

4. Greiferhand nach einem der Ansprüche 1 bis 3, dadurch gekennzeichnet, dass die Programmiervorrichtung (11, 11') für jede Bewegungsrichtung des Armes (10) mindestens einen Sensor (z.B. 24, 24', 25, 25') aufweist.

5. Greiferhand nach Anspruch 3, dadurch gekennzeichnet, dass das Verbindungsstück (12) ein etwa dreiecksförmiges Kupplungsteil (14) trägt, das über eine dritte Kupplung (13) mit dem Verbindungsstück (12) lösbar verbunden ist und das die erste Kupplung (15) trägt.

6. Greiferhand nach einem der Ansprüche 1 bis 5, dadurch gekennzeichnet, dass die Kupplungen (13, 15, 27) Schraubkupplungen sind.

7. Greiferhand nach einem der Ansprüche 1 bis 6, dadurch gekennzeichnet, dass das letzte Glied (9) das Handrückenglied ist.

8. Greiferhand nach einem der Ansprüche 1 bis 7, dadurch gekennzeichnet, dass die Programmiervorrichtung (11) ein mit dem Arm (10) starr verbindbares Innenteil (18) und eine das Innenteil (18) übergreifende Hülse (19) aufweist, welche mit dem letzten Glied (9) verbindbar ist und zwischen Innenteil (18) und Hülse (19) die Sensoren (z.B. 24, 24', 25, 25') angeordnet sind.

9. Greiferhand nach einem der Ansprüche 1 bis 8, dadurch gekennzeichnet, dass an der Programmiervorrichtung (11, 11') ein Tastenschalter (31) angeordnet ist.

## Claims

1. A gripping hand as a component for a manipulator, which consists of several hollow elements (9), simulating the human hand, which are linked to one another by articulations, whereby each element has a reversibly-actuated positioning drive (7) and a sensor (8), for programming the sensors detect the movements of the elements which are performed by a human hand inserted in the gripping hand, and the signals from the sensors determine the programm which the elements perform, controlled by the relevant positioning drive, whereby the gripping hand is disposed on an arm (10) which can be programmed by the movements of the gripping hand, if a human hand describing these movements is inserted in the gripping hand, and this arm can perform movements in three mutually perpendicular axes and rotary movements, characterised in that on the arm (10) are provided a programming device (11, 11') and parallel thereto a rigid connection piece (12), the end of the connection piece (12) turned away from the arm (10) has a first coupling (15), the end of the programming device (11, 11') turned away from the arm (10) is connected to the last element (9) of the gripping hand (1) turned toward the arm (10) and this element (9) can be detachably connected to the connection piece (12) via the first coupling (15).

2. A gripping hand according to claim 1, characterised in that the end of the programming device (11, 11') turned away from the arm (10) has a second coupling (27) with which the programming device (11, 11') is detachably connected to the last element (9).

3. A gripping hand according to claim 1 or 2, characterised in that the programming device (11, 11') is detachably connected to the arm (10).

4. A gripping hand according to one of claims 1 to 3, characterised in that the programming device (11, 11') has at least one sensor (e.g. 24, 24', 25, 25') for each direction of movement of the arm (10).

5. A gripping hand according to claim 3, characterised in that the connection piece (12) bears an approximately triangular coupling piece (14), which is detachably connected to connection piece (12) via a third coupling (13) and which bears the first coupling (15).

6. A gripping hand according to one of claims 1 to 5, characterised in that the couplings (13, 15, 27) are screw couplings.

7. A gripping hand according to one of claims 1 to 6, characterised in that the last element (9) is the hand back element.

8. A gripping hand according to one of claims 1 to 7, characterised in that the programming device (11) has an inner part (18) which can be rigidly connected to the arm (10) and a casing (19) engaging over the inner part (18), which casing can be connected to the last element (9) and the sensors (e.g. 24, 24', 25, 25') are disposed between the inner part (18) and the casing (19).

9. A gripping hand according to one of claims 1 to 8, characterised in that on the programming device is disposed a push-button switch (31).

## Revendications

1. Main préhensile formant un élément constitutif d'un manipulateur et qui est constituée de plusieurs organes creux (2) imitant la main humaine et qui sont erticulés entre eux, tandis qu'il est associé à chaque organe un vérin à manœuvre réversible (7) et un capteur (8) et que, pour réaliser la programmation, les capteurs enregistrent les mouvements des organes qui sont exécutés par une main humaine introduite dans la main préhensile et les signaux de ces capteurs définissent le programme qu'exécutent les organes en étant commandés chacun par le vérin associé, alors que par ailleurs la main préhensile est montée sur un bras (10) qui peut être programmé par les mouvements de cette main préhensile lorsqu'est introduite dans celle-ci une main humaine exécutant ces mouvements, et que ce bras peut exécuter des mouvements suivant trois axes perpendiculaires entre eux et des mouvements de rotation, caractérisée en ce qu'il est prévu sur le bras (10) un dispositif de programmation (11, 11') et, parallèlement à celui-ci, une pièce rigide de jonction (12), en ce que l'extrémité de cette pièce de jonction (12) située à l'opposé du bras (10) comprend un premier accouplement (15), en ce que l'extrémité du dispositif de programmation (11, 11') située à l'opposé du bras (10) est reliée au dernier organe (9) de la main préhensile (1) situé du côté du bras (10) et en ce que cet organe (9) peut être relié de manière amovible à la pièce de jonction (12) par l'intermédiaire du premier accouplement (15).

2. Main préhensile suivant la revendication 1, caractérisée en ce que l'extrémité du dispositif de programmation (11, 11') située à l'opposé du bras (10) comprend un deuxième accouplement (27) à l'aide duquel ce dispositif de programmation (1·1, 11') est relié de manière amovible au dernier organe (9).

3. Main préhensile suivant la revendication 1 ou 2, caractérisée en ce que le dispositif de programmation (11, 11') est relié de manière amovible au bras (10).

4. Main préhensile suivant l'une des revendications 1 à 3, caractérisée en ce que le dispositif de programmation (11, 11') comprend au moins un capteur (par exemple 24, 24', 25, 25') pour chaque direction de mouvement du bras (10).

5. Main préhensile suivant la revendication 3, caractérisée en ce que la pièce de jonction (12) porte un élément d'accouplement de forme sensiblement triangulaire (14) qui est relié de manière amovible à cette pièce de jonction (12) par l'intermédiaire d'un troisième accouplement (13) et qui porte le premier accouplement (15).

6. Main préhensile suivant l'une des revendications 1 à 5, caractérisée en ce que les accouplements (13, 15, 27) sont des accouplements à vis.

7. Main préhensile suivant l'une des revendications 1 à 6, caractérisée en ce que le dernier organe (9) est l'organe du dos de la main.

8. Main préhensile suivant l'une des revendications 1 à 7, caractérisée en ce que le dispositif de programmation (11) comprend un élément intérieur (18) pouvant être relié rigidement au bras (10) et un manchon (19) entourant cet élément intérieur (18) et qui peut être relié au dernier organe (9), les capteurs (par exemple 24, 24', 25, 25') étant disposés entre cet élément intérieur (18) et ce manchon (19).

9. Main préhensile suivant l'une des revendications 1 à 8, caractérisée en ce qu'un interrupteur à touche (31) est disposé sur le dispositif de programmation (11, 11').

FIG.2

FIG.1